# EUROPEAN PATENT APPLICATION

(11) **EP 4 813 926 A1**
(43) Date of publication of application: **30.09.2026**
(21) Application number: 26166926.1
(22) Date of filing: 23.03.2026
(51) Int. Cl.: C01G 53/504, H01M 4/00

(54) **METHODS OF PREPARING POSITIVE ELECTRODE ACTIVE MATERIALS, POSITIVE ELECTRODE ACTIVE MATERIALS, AND RECHARGEABLE LITHIUM BATTERIES**

(30) Priority: 27.03.2025 KR 20250039461; 27.03.2025 KR 20250039464; 27.03.2025 KR 20250039465; 27.03.2025 KR 20250039491; 27.03.2025 KR 20250039497
(71) Applicant: SAMSUNG SDI CO., LTD., Yongin-si, Gyeonggi-do 17084 (KR)
(72) Inventor: KIM, Young-Ki, 17084 Yongin-si (KR); KANG, Seok Mun, 17084 Yongin-si (KR); YOON, Jaesang, 17084 Yongin-si (KR); KIM, Jihyeun, 17084 Yongin-si (KR); JEONG, Jaeyoung, 17084 Yongin-si (KR); KIM, Eugene, 17084 Yongin-si (KR); LEE, Soonrewl, 17084 Yongin-si (KR)
(74) Representative: Maiwald GmbH

(57) **Abstract**

A method of preparing a positive electrode active material includes preparing core particles including a lithium nickel-based composite oxide and mixing the core particles and water to wash the core particles. The method further includes removing a portion of the water so that the washing water is included in an amount of about 1 wt% to about 10 wt% based on a total 100 wt% of the core particles and washing water to obtain a washed product. The method also includes mixing the washed product, an aluminum raw material and a metal raw material into a mixer and performing heat treatment at about 300 °C to about 400 °C. The metal raw material is a boron raw material or a tungsten raw material.

## Description

### BACKGROUND

### 1. Field

Methods of preparing positive electrode active materials, positive electrode active materials, and rechargeable lithium batteries are disclosed.

### 2. Description of the Related Art

Portable information devices such as cell phones, laptops, smart phones, and the like used rechargeable batteries. Electric vehicles also use a rechargeable lithium battery having high energy density and easy portability as a driving power source. Research has been conducted in using a rechargeable lithium battery with high energy density as a driving power source or power storage power source for hybrid or electric vehicles.

Various positive electrode active materials have been investigated for use in rechargeable lithium batteries. Among these materials, a lithium nickel-based composite oxide, a lithium nickel manganese cobalt-based composite oxide, a lithium nickel cobalt aluminum-based composite oxide, and a lithium cobalt-based composite oxide are most often used as positive electrode active materials. With the rapidly increasing demand for large-sized, high-capacity, or high-energy-density rechargeable lithium batteries, there is a need to develop positive electrode active materials that provide improved stability and performance in rechargeable lithium batteries.

### SUMMARY

A method of preparing a positive electrode active material including a lithium nickel-based composite oxide is provided, wherein the performance of a rechargeable lithium battery at high temperature and high voltage is improved, and capacity characteristics, initial charge/discharge efficiency, and high-temperature cycle-life characteristics are improved by introducing an optimal coating layer.

In some embodiments, a method of preparing a positive electrode active material includes: (i) preparing core particles including a lithium nickel-based composite oxide; (ii) mixing the core particles and water to wash the core particles; (iii) removing a portion of the water so that the water is included in an amount of about 1 wt% to about 10 wt% based on a total 100 wt% of the core particles and water to obtain a washed product; and (iv) mixing the washed product, an aluminum raw material and a metal raw material and performing heat treatment at about 300 °C to about 400 °C, wherein the metal raw material is a boron raw material or a tungsten raw material.

In some embodiments, a positive electrode active material prepared by the method of preparing the positive electrode active material is provided.

In some embodiments, a rechargeable lithium battery includes a positive electrode including the positive electrode active material; a negative electrode; and an electrolyte.

According to the method of preparing the positive electrode active material according to embodiments of the present disclosure, an optimal coating layer may be introduced onto the surface of a positive electrode active material by a simple and efficient process, and a rechargeable lithium battery including the positive electrode active material formed through the method of preparing the positive electrode active material may exhibit high initial charge/discharge capacity and efficiency and may have long cycle-life characteristics.

### BRIEF DESCRIPTION OF THE DRAWINGS

FIG.1 is a view of a cylindrical rechargeable lithium battery.
FIG. 2 is a cross-sectional view of a prismatic rechargeable lithium battery.
FIGS. 3 and 4 are schematic exploded perspective views of a pouch-type rechargeable lithium battery.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

It should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

As used herein, "layer" herein includes not only a shape formed on the whole surface when viewed from a plan view, but also a shape formed on a partial surface.

An average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter means a diameter (D₅₀) of particles having a cumulative volume of 50 volume% in the particle size distribution that is obtained by measuring the size (diameter or major axis length) of 20 particles at random in a scanning electron microscope image. The volume of a particle is calculated using the value read from the scanning electron microscope image on basis of the assumption that the particles have a spherical shape.

Herein, "or" is not to be construed as an exclusive meaning, for example, "A or B" is construed to include A, B, A+B, and the like.

Herein, "metal" includes ordinary metals, transition metals and metalloids (semi-metals). Within the framework of the present application, the term 'metalloid (semi metal)' means a chemical element selected from the group consisting of B, Si, As, Te, and At. The heavier homologues of each of these metalloids (semi metals) hence represent metals. Likewise, the elements of groups 3-12 of the periodic table represent metals and the elements of groups 1 and 2 excluding H (but including Be) are regarded as representing metals.

### Method for Preparing Positive Electrode Active Material

In some example embodiments, a method of preparing a positive electrode active material includes: (i) preparing core particles including a lithium nickel-based composite oxide; (ii) mixing the core particles and water to wash the core particles; (iii) removing a portion of the water so that the water is included in an amount of about 1 wt% to about 10 wt% based on a total 100 wt% of the core particles and water to obtain a washed product; and (iv) putting the washed product, an aluminum raw material and a metal raw material into a mixer and performing heat treatment at about 300 °C to about 400 °C, wherein the metal raw material is a boron raw material or a tungsten raw material.

In embodiments, a method improves high-voltage and high-temperature cycle-life characteristics and also initial charge/discharge efficiency by introducing coating layers containing aluminum and boron or tungsten onto the surfaces of core particles containing a lithium nickel-based composite oxide, which thereby strengthens the particle surfaces and forms a coating layers having a structurally 3D lithium channel.

In preparing of the core particles containing lithium nickel-based composite oxide, a first heat treatment is performed, which may cause a problem of high residual lithium on the surfaces of the core particles. Thus, a washing process may be required, and a drying process is performed after the washing process. As such, there are problems of increased processing costs and reduced production volume because second heat treatment needs to be performed separately after the drying process. But according to the method of preparing the positive electrode active material according to embodiments of the present disclosure, the drying process and second heat treatment after the washing process are performed as a single process rather than as separate steps, which thereby reduces processing costs. In addition, by coating aluminum and coating boron or tungsten using a wet coating method while the mixer is in operation after the washing process, the surface of the positive electrode active material may be coated more effectively than with the existing coating method. And by performing the drying process simultaneously with the coating, processing costs may be reduced and the coating may be made uniform.

In the method of preparing a positive electrode active material according to some embodiments, the preparation of core particles including the lithium nickel-based composite oxide may include mixing a nickel-based composite hydroxide and a lithium raw material and performing a first heat treatment. The nickel-based composite hydroxide is a precursor of core particles, and the nickel-based composite hydroxide may be prepared by a co-precipitation method.

In the nickel-based composite hydroxide, an amount of nickel based on 100 mol% of a total metal may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, about 60 mol% to about 75 mol%, about 80 mol% to about 99 mol%, about 82 mol% to about 95 mol%, about 85 mol% to about 95 mol%, about 87 mol% to about 93 mol%, about 88 mol% to about 92 mol%, or about 90 mol% to about 95 mol%. When the amount of nickel is in these ranges, high capacity may be achieved

If the nickel-based composite hydroxide further contains aluminum, the aluminum content based on 100 mol% of a total metal in the nickel-based composite hydroxide may be greater than or equal to about 0.1 mol%, greater than or equal to about 0.5 mol%, or greater than or equal to about 1 mol%, for example, about 1 mol% to about 3 mol%, about 1 mol% to about 2.5 mol%, or about 1 mol% to about 2 mol%. If the amount of aluminum in the composite hydroxide is in these ranges, the structural stability of the positive electrode active material may be improved while providing high capacity and the production cost may be lowered.

A method of preparing a positive electrode active material according to some embodiments may use a nickel-aluminum-based composite hydroxide as a precursor in which aluminum is evenly dispersed within the structure by using an aluminum raw material during the preparation of the precursor without additionally doping aluminum during the preparation of the core particles. If such precursors are used, a positive electrode active material may be prepared in which the layered structure is stably maintained even after repeated charging and discharging, and since aluminum byproducts or aluminum agglomerates are not formed, the capacity, efficiency characteristics, and cycle-life characteristics of the positive electrode active material may be improved.

In the nickel-based composite hydroxide, a cobalt content based on 100 mol% of a total metal may be less than or equal to about 0.01 mol%, less than or equal to about 0.005 mol%, or less than or equal to about 0.001 mol%, for example 0 mol% to about 0.01 mol%, 0 mol% to about 0.005 mol%, or 0 mol% to about 0.001 mol%. The nickel-based composite hydroxide is economic because it has little or no cobalt and the nickel-based composite hydroxide maximizes capacity and improves structural stability.

In some examples, the nickel-based composite hydroxide may be represented by Chemical Formula 1:

[Chemical Formula 1] Niₓ₁M¹y₁M²_{z1}(OH)₂

In Chemical Formula 1, 0.3 ≤ x1 ≤1, 0 ≤ y1 ≤ 0.7, 0 ≤ z1 ≤ 0.7, and 0.9 ≤ x1+y1+z1 ≤ 1.1, M¹ and M² may be different and may each independently be one or more of Al, B, Ba, Ca, Ce, Co, Cr, Cu, Fe, Mg, Mn, Mo, Nb, Si, Sn, Sr, Ti, V, W, Y, Zn, and Zr, and M¹ and M² may be different from each other. In further embodiments of Chemical Formula 1, 0.6 ≤ x1 ≤ 1, 0 ≤ y1 ≤ 0.4, and 0 ≤ z1 ≤ 0.4; or 0.8 ≤ x1 ≤ 1, 0 ≤ y1 ≤ 0.2, and 0 ≤ z1 ≤ 0.2; or 0.9 ≤ x1<1, 0<y1 ≤0.1, and 0 ≤ z1 ≤ 0.1.

In other examples, the nickel-based composite hydroxide may be represented by Chemical Formula 2:

[Chemical Formula 2] Niₓ₂Mn_{y2}Al_{z2}M³_{w2}(OH)₂

In Chemical Formula 2, 0.6 ≤ x2 ≤ 0.8, 0.1 ≤ y2 ≤ 0.4 0 ≤ z2 ≤ 0.03, 0 ≤ w2 ≤ 0.3, and 0.9 ≤ x2+y2+z2+w2 ≤ 1.1, and M³ is one or more of B, Ba, Ca, Ce, Cr, Fe, Mg, Mo, Nb, Si, Sn, Sr, Ti, V, W, Y, Zr, and Zn. In further embodiments of Chemical Formula 2, 0.6 ≤ x2 ≤ 0.8, 0.1 ≤ y2 ≤ 0.39, 0.01 ≤ z2 ≤ 0.03, 0 ≤ w2 ≤ 0.29.

The nickel-based composite hydroxide may be in the form of particles. The average particle diameter (D₅₀) of the particles may be about 8 µm to about 15 µm, for example about 9 µm to about 14 µm, about 10 µm to about 13 µm, about 2 µm to about 5 µm, about 3 µm to about 5 µm, or about 3.5 µm to about 4.5 µm.

The nickel-based composite hydroxide and lithium raw material may be mixed in a molar ratio of about 1:0.9 to about 1:1.8, for example, about 1:0.9 to about 1:1.5, or about 1:1 to about 1:1.2.

The first heat treatment may be performed, for example, in an oxygen atmosphere at a temperature range of about 750 °C to about 950 °C, about 780 °C to about 900 °C, or about 810 °C to about 890 °C. The first heat treatment may be performed for about 2 hours to about 20 hours, or about 4 hours to about 12 hours.

The lithium nickel-based composite oxide may be obtained through the first heat treatment. In the lithium nickel-based composite oxide, a nickel content based on 100 mol% of a total metal excluding lithium may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, about 60 mol% to about 75 mol%, about 80 mol% to about 99 mol%, about 82 mol% to about 95 mol%, about 85 mol% to about 95 mol%, about 87 mol% to about 93 mol%, about 88 mol% to about 92 mol%, or about 90 mol% to about 95 mol%. If the amount of nickel is in these ranges, high capacity may be achieved. The nickel is included in the core particles, but some of the nickel may migrate to the coating layers during the coating process. Thus, the nickel content may refer to a nickel content included in the entire positive electrode active material.

The lithium nickel-based composite oxide may be, for example, a lithium nickel-cobalt-aluminum-based composite oxide that further contains aluminum in addition to nickel and cobalt. Aluminum in the lithium nickel-based composite oxide may help maintain a stable structure. In the lithium nickel-based composite oxide, an aluminum content based on 100 mol% of a total metal excluding lithium may be greater than or equal to about 0.1 mol%, greater than or equal to about 0.5 mol%, or greater than or equal to about 1 mol%, for example, about 1 mol% to about 3 mol%, about 1 mol% to about 2.5 mol%, or about 1 mol% to about 2 mol%. Here, the aluminum content refers to an amount of aluminum present in the core particles. If the amount of aluminum is in these ranges, a stable structure may be maintained, the problem of the structure collapsing due to charge and discharge may be suppressed, and the long cycle-life characteristics of the positive electrode active material may be realized.

In some embodiments, the concentration of aluminum within the core particles may be uniform. In other words, there is no concentration gradient of aluminum from the centers to the surfaces of the core particles and the aluminum concentration in the outer portions of the core particles is neither higher nor lower than in the internal portions such that the aluminum within the core particles is evenly distributed. Such a structure may be obtained by using aluminum raw materials during preparing of the precursor without additional doping of aluminum during the synthesis process of the core particles. The core particles may be in a form of secondary particles that are agglomerations of primary particles, and the aluminum content inside the primary particles may be the same or similar regardless of the locations of the primary particles. That is, if a primary particle is selected at an arbitrary location in the cross-section of a secondary particle and the aluminum content is measured at the interior of the primary particle rather than at the interface, the aluminum content may be the same/similar/uniform regardless of the location of the primary particle, that is, whether the primary particle is close to the center or surface of the secondary particle. In such a structure, a stable layered structure may be maintained even with little or no cobalt, and aluminum byproducts or aluminum agglomerates are not generated such that the capacity, efficiency, and cycle-life characteristics of the positive electrode active material may be improved.

In some examples, the lithium nickel-based composite oxide may be represented by Chemical Formula 3:

[Chemical Formula 3] Liₐ₃Niₓ₃M⁴_{y3}M⁵_{z3}O_{2-b3}X_{b3}

In Chemical Formula 3, 0.9 ≤ a3 ≤ 1.8, 0.3 ≤ x3 ≤ 1, 0 ≤ y3 ≤ 0.7, 0 ≤ z3 ≤ 0.7, 0.9 ≤ x3+y3+z3 ≤ 1.1, and 0 ≤ b3 ≤ 0.1, M⁴ and M⁵ may each independently be one or more of Al, B, Ba, Ca, Ce, Co, Cr, Cu, Fe, Mg, Mn, Mo, Nb, Si, Sn, Sr, Ti, V, W, Y, Zn, and Zr, M⁴ and M⁵ may be different from each other, and X is one or more of F, P, and S. In further embodiments of Chemical Formula 3, 0.6 ≤ x3 ≤1, 0 ≤ y3 ≤ 0.4, and 0 ≤ z3 ≤ 0.4; or 0.8 ≤ x3 ≤ 1, 0 ≤ y3 ≤ 0.2, and 0 ≤ z3 ≤ 0.2; or 0.9 ≤ x3<1, 0<y3≤0.1, and 0 ≤ z3 ≤ 0.1.

In other examples, the lithium nickel-based composite oxide may be represented by Chemical Formula 4:

[Chemical Formula 4] Liₐ₄Niₓ₄Mn_{y4}Al_{z4}M⁶_{w4}O_{2-b4}X_{b4}

In Chemical Formula 4, 0.9 ≤ a4 ≤ 1.8, 0.6 ≤ x4 ≤ 0.8, 0.1 ≤ y4 ≤ 0.4, 0 ≤ z4 ≤ 0.03, 0 ≤ w4 ≤ 0.3, 0.9 ≤ x4+y4+z4+w4 ≤ 1.1, and 0 ≤ b4 ≤0.1, M⁶ is one or more of B, Ba, Ca, Ce, Cr, Fe, Mg, Mo, Nb, Si, Sn, Sr, Ti, V, W, Y, Zr, and Zn, and X is one or more of F, P, and S. In further embodiments of Chemical Formula 4, 0.9 ≤ a4 ≤ 1.5, or 0.9 ≤ a4 ≤ 1.2. Chemical Formula 4 may additionally contain aluminum, in which case 0.6 ≤ x4 ≤ 0.8, 0.1 ≤ y4 ≤ 0.39, 0.01 ≤ z4 ≤ 0.03, and 0 ≤ w4 ≤ 0.29. In further embodiments with Chemical Formula 4, 0.6 ≤ x4 ≤ 0.79, 0.6≤x4≤0.78, 0.6≤x4≤0.75, 0.65≤x4≤0.8, or 0.7 ≤ x4 ≤ 0.79; 0.1 ≤ y4 ≤ 0.35, 0.1 ≤ y4 ≤ 0.30, 0.1 ≤ y4 ≤ 0.29, 0.15 ≤ y4 ≤ 0.39, or 0.2 ≤ y4 ≤ 0.3; 0.01 ≤ z4 ≤ 0.025, 0.01<z4≤0.02, or 0.01<z4≤0.019; 0 ≤ w4 ≤ 0.28, 0 ≤ w4 ≤ 0.27, 0 ≤ w4 ≤ 0.26, 0 ≤ w4 ≤ 0.25, 0 ≤ w4 ≤ 0.24, 0 ≤ w4 ≤ 0.23, 0 ≤ w4 ≤ 0.22, 0 ≤ w4 ≤ 0.21, 0 ≤ w4 ≤ 0.2, 0 ≤ w4 ≤ 0.15, 0 ≤ w4 ≤ 0.1, or 0 ≤ w4 ≤ 0.09.

The lithium nickel-based composite oxide may be, for example, a cobalt-free compound that does not contain cobalt or contains a very small amount of cobalt. A cobalt content based on 100 mol% of a total metal excluding lithium may be less than or equal to about 0.01 mol%, less than or equal to about 0.005 mol%, or less than or equal to about 0.001 mol%, for example, 0 mol% to about 0.01 mol%, 0 mol% to about 0.005 mol%, or 0 mol% to about 0.001 mol%. The nickel-based composite oxide is more economical with little or no cobalt, and it has improved capacity and structural stability.

The core particles may be in a form of secondary particles that are agglomerations of primary particles. The secondary particles may be spherical, ellipsoidal, polyhedral, or irregularly shaped, and the primary particles may be spherical, ellipsoidal, plate-shaped, or a combination thereof. The average particle diameter (D₅₀) of the secondary particles may be about 8 µm to about 15 µm, for example, about 9 µm to about 14 µm, or about 10 µm to about 13 µm. By using core particles in the form of secondary particles, the density of the final positive electrode active material may be increased and the capacity, charge/discharge efficiency, rate capability, and output characteristics may be improved.

The core particles may be in a form of single particles. Here, single particles exist alone without a grain boundary within the particle, is composed of one particle, and may be a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal. The single particles may exist alone, or single particles may be attached together. For example, 2 to 10 single particles may be attached and in contact with each other.

The average particle diameter (D₅₀) of the core particles may be about 2 µm to about 5 µm, for example, about 3 µm to about 5 µm, or about 3.5 µm to about 4.5 µm. According to some embodiments, a lithium nickel-based composite oxide having a nickel content of greater than or equal to about 60 mol% based on 100 mol% of a total metal excluding lithium has a significantly different amount of residual lithium on the particle surfaces and different characteristics of the surfaces from oxides of other compositions, which make it difficult to form a good coating layer as a uniform film using a conventional coating method. In some example embodiments of the present disclosure, a method is proposed to coat the particle surface of a lithium nickel-based composite oxide uniformly.

In the washing of the core particles by mixing the core particles and water (e.g., distilled water), the core particles and the water may be mixed in a weight ratio of about 0.5:1 to about 1:1 to wash the core particles. For example, the core particles may be mixed with water in a weight ratio of about 0.6:1 to about 1:1, or about 0.7:1 to about 0.9:1 to wash the core particles. Additionally, the mixing of the core particles and the water to wash the core particles may be performed for about 1 minute to about 30 minutes, and, for example, may be performed for about 1 minute to about 10 minutes. In the preparing of the core particles including the lithium nickel-based composite oxide through the washing process, the lithium remaining after the first heat treatment may be removed. If the conditions such as the weight ratio of the core particles and the water, the washing time, etc. are satisfied, the residual lithium on the surfaces of the core particles including the lithium nickel-based composite oxide may be effectively removed, and the problem of lithium inside the core particles being eluted to reduce the capacity may be suppressed.

To obtain the washed product by removing a portion of the water according to some embodiments, a portion of the water may be removed so that the water is included in an amount of about 1 wt% to about 10 wt% based on a total 100 wt% of the core particles and water, and, for example, a portion of the water may be removed so that the water is included in an amount of about 5 wt% to about 10 wt%, or about 5 wt% to about 7 wt%, based on a total 100 wt% of the core particles and washing water. By removing a portion of the water in this way, a washed product may be obtained, and the washed product may include about 90 wt% to about 99 wt% of core particles and about 1 wt% to about 10 wt% of washing water, or about 90 wt% to about 95 wt% of core particles and about 5 wt% to about 10 wt% of washing water, or about 93 to about 95 wt% of core particles and about 5 wt% to about 7 wt% of washing water. If the washed product includes the water within these ranges, the mixing of the positive electrode active materials is smooth in the subsequent drying process, and the metal is dissolved in the remaining washing water so that the coating is uniformly formed.

In the method of preparing the positive electrode active material according to some embodiments, a washed product including about 1 wt% to about 10 wt% of water based on a total 100 wt% of the core particles and washing water, an aluminum raw material, and a metal raw material are put into a mixer. In this process, drying of the washed product and coating of the positive electrode active material may be performed simultaneously, thereby simplifying the process, reducing processing costs, and increasing production volume. In addition, by mixing the washed product, aluminum raw material, and metal raw material in a state where the water is included at about 1 wt% to about 10 wt%, the aluminum raw material and the metal raw material may be partially dissolved in the remaining water, and thus may be uniformly coated with a thin thickness on the surface of the positive electrode active material. Accordingly, the prepared positive electrode active material may have excellent capacity characteristics and cycle-life characteristics. The mixer is suitable for drying a washed product including about 1 wt% to about 10 wt% of water, and is suitable for mixing a product, aluminum raw material, and metal raw material, and may also be suitable for heat treatment so that the surface of a positive electrode active material is uniformly coated.

The aluminum raw material and metal raw material may be put into the mixer in a form dissolved in an aqueous solvent. The aqueous solvent may include distilled water, an alcohol-based solvent, or a combination thereof. The aluminum raw material may be aluminum sulfate, aluminum sulfate hydrate, aluminum nitrate, aluminum nitrate hydrate, or a combination thereof. Aluminum nitrate hydrate may form uniform aluminum coating layers on the surfaces of core particles. The metal raw material may be a boron raw material or a tungsten raw material. The boron raw material may be boronic acid (H₃BO₃), boron sulfate, boron nitride, or a combination thereof. Boric acid may form a uniform boron coating layer on lithium nickel-based composite oxide. The tungsten raw material may be a tungsten organic material, and for example, may be ammonium metatungstate hydrate (H₂₆N₆O₁₀W₁₂-H₂O). The ammonium metatungstate hydrate may form a uniform tungsten coating layer on the surface of a lithium nickel-based composite oxide after drying, with the organic portion removed. The tungsten raw material may be put into the mixer in a solid state, i.e., in powder form, and an example of the tungsten raw material may be tungsten oxide (WO₃).

Based on 100 mol% of the total metal excluding lithium in the core particles and aluminum of the aluminum raw material, an aluminum content of the aluminum raw material may be about 0.1 mol% to about 1.0 mol%, for example, about 0.1 mol% to about 0.5 mol%, about 0.2 mol% to about 0.5 mol%, or about 0.2 mol% to about 0.3 mol%. When the amount of aluminum is in these ranges, a coating layer having a uniform thickness of several nanometers to several hundred nanometers can be formed, thereby reducing the amount of gas generated from a rechargeable lithium battery under high-voltage or high-temperature driving conditions and improving high capacity and long cycle-life characteristics.

Based on 100 mol% of the total metal excluding lithium in the core particles and boron of the boron raw material, a boron content in the boron raw material may be about 0.1 mol% to about 3.0 mol%, for example, about 0.1 mol% to about 2.0 mol%, about 0.1 mol% to about 1.0 mol%, about 0.2 mol% to about 1.0 mol%, about 0.2 mol% to about 0.6 mol%, about 0.4 mol% to about 1.0 mol%, about 0.4 mol% to about 0.8 mol%, about 0.8 mol% to about 1.2 mol%, about 0.6 mol% to about 0.8 mol%, or about 0.4 mol% to about 0.6 mol%. With a boron content in these ranges, a coating layer having a uniform thickness of several nanometers to several hundred nanometers can be formed. Such a coating layer may reduce the amount of gas generated from a rechargeable lithium battery under high-voltage or high-temperature driving conditions and improve high capacity and long cycle-life characteristics.

Based on a total of 100 mol% of the metal excluding lithium in the core particles and tungsten of the tungsten raw material, a tungsten content in the tungsten raw material may be about 0.01 mol% to about 0.5 mol%, for example about 0.01 mol% to about 0.2 mol%, about 0.02 mol% to about 0.2 mol%, about 0.02 mol% to about 0.15 mol%, about 0.05 mol% to about 0.15 mol%, about 0.05 mol% to about 0.1 mol%, about 0.1 mol% to about 0.15 mol%, about 0.01 mol% to about 0.05 mol%, about 0.02 mol% to about 0.05 mol%, about 0.02 mol% to about 0.04 mol%, about 0.01 mol% to about 0.04 mol%, about 0.01 mol% to about 0.03 mol%, or about 0.02 mol% to about 0.03 mol%. With tungsten content in these ranges, a coating layer having a uniform thickness of several nanometers to several hundred nanometers can be formed. Such a coating layer may reduce the amount of gas generated from a rechargeable lithium battery under high-voltage or high-temperature driving conditions and improve high capacity and long cycle-life characteristics.

In the method of preparing the positive electrode active material according to some embodiments, a coating layer may be formed on the surfaces of core particles through a process of adding the washed product, aluminum raw material, and metal raw material into a mixer and performing heat treatment at about 300 °C to about 400 °C.

Unlike a wet pre-addition method in which the salt as a coating raw material is first completely dissolved and then the core particles are added, a wet post-addition method in which the core particles are added and then the salt as a coating raw material are added, and a dry method in which the powder-type core particles and the powder-type coating raw material are mixed and are subjected to heat treatment, in embodiments of the present disclosure conditions are such that uniform coating layers are formed on the core particles including a lithium nickel-based composite oxide by washing the core particles to reduce the residual lithium content on the surfaces of the core particles and then proceeding with the coating using the coating raw material.

In a method of preparing a positive electrode active material according to some embodiments, the washed product, aluminum raw material, and metal raw material may be put into a mixer that mixes at a speed of about 50 RPM or less. For example, the washed product, aluminum raw material, and metal raw material may be put into a mixer that mixes at a speed of about 20 RPM or less. A mixer that mixes at a speed of less than or equal to about 50 RPM may be, for example, a Lödige mixer. If the speed of the mixer exceeds 50 RPM, the positive electrode active material inside the mixer may not be smoothly mixed due to moisture. Therefore, when the speed of the mixer is within this range, the positive electrode active material inside the mixer may be mixed smoothly, and drying and coating of the washed product may be performed simultaneously.

The washed product put into the mixer may include about 1 wt% to about 10 wt% of water based on 100 wt% of the total core particles and water, and for example, the washed product may include about 5 wt% to about 10 wt% of water, or about 5 wt% to about 7 wt% of water based on 100 wt% of the total core particles and water. If the washed product includes the water within the above ranges, the mixing of the positive electrode active materials is smoothly performed in the subsequent drying process, and the metal is dissolved in the remaining washing water such that the coating may be uniformly formed.

A method of preparing a positive electrode active material according to some embodiments may include introducing the washed product, aluminum raw material, and metal raw material into a mixer that mixes at a speed of less than or equal to about 50 RPM, and performing heat treatment at about 300 °C to about 400 °C, for example, performing heat treatment at about 350 °C to about 390 °C. Typically, a drying process is performed at about 200 °C after the washing process, and a second heat treatment is performed at about 800°C after the drying process. But in a method of preparing a positive electrode active material according to embodiments of the present disclosure, the drying process and the second heat treatment are not performed as separate processes, but rather as a single process at a low temperature, thereby reducing processing costs and enabling the formation of a uniform coating.

### Positive Electrode Active Material

A positive electrode active material prepared according to the method of preparing the positive electrode active material is provided. By introducing a coating layer containing a specific metal content on the surfaces of core particles including lithium nickel-based composite oxide, the positive electrode active material method maintains a stable structure even at high voltage, implements high capacity and long cycle-life characteristics, and improves high-temperature storage characteristics of a battery that includes the positive electrode active material.

### Core Particles

The core particles include a lithium nickel-based composite oxide, and the lithium nickel-based composite oxide may be represented by Chemical Formula 3 or Chemical Formula 4 above.

The core particles may be easily chemically attacked by components in an electrolyte when the battery is operated under high-voltage or high-temperature conditions, which may in turn cause side reactions with the electrolyte and thereby generate a large amount of gas. As a result, problems such as deteriorating battery cycle-life and safety may occur. But these problems may be solved by introducing the coating layer described herein.

### Coating Layer

The positive electrode active material according to embodiments of the present disclosure includes coating layers disposed on the surfaces of the core particles, with the coating layers includes aluminum and another metal. Here, the metal may be boron or tungsten.

As measured by inductively coupled plasma (ICP) spectroscopy analysis, the aluminum content in the coating layer based on 100 mol% of the total metal excluding lithium in the positive electrode active material may be about 0.1 mol% to about 1.0 mol%, for example, about 0.1 mol% to about 0.5 mol%, about 0.2 mol% to about 0.5 mol%, or about 0.2 mol% to about 0.3 mol%. When the amount of aluminum is in these ranges, the positive electrode active material may provide excellent capacity characteristics and cycle-life characteristics with the aluminum at a high concentration and with thin coating thickness on the surfaces of the particles. ICP-AES (ICP 5300DV, PerkinElmer) may be used as an ICP spectroscopy instrument, and analysis may be performed under the following conditions: forward power 1300 W; torch height 15 mm; plasma gas flow 15.00 L/min; sample gas flow 0.8 L/min; auxiliary gas flow 0.20 L/min, and pump speed 1.5 ml/min.

As measured by inductively coupled plasma (ICP) spectroscopy analysis the amount of boron in the coating layer based on 100 mol% of the total metal excluding lithium in the positive electrode active material may be about 0.1 mol% to about 3.0 mol%, for example, about 0.1 mol% to about 2.0 mol%, about 0.1 mol% to about 1.0 mol%, about 0.2 mol% to about 1.0 mol%, about 0.2 mol% to about 0.6 mol%, about 0.4 mol% to about 1.0 mol%, about 0.4 mol% to about 0.8 mol%, about 0.8 mol% to about 1.2 mol%, about 0.6 mol% to about 0.8 mol%, or about 0.4 mol% to about 0.6 mol%. When the amount of boron is in these ranges, the positive electrode active material may provide excellent capacity characteristics and cycle-life characteristics by containing boron at a high concentration and a thin thickness on the surfaces of the particles.

As measured by inductively coupled plasma (ICP) spectroscopy analysis for the positive electrode active material, the tungsten content in the coating layer based on 100 mol% of the total metal excluding lithium in the positive electrode active material, may be about 0.01 mol% to about 0.2 mol%, about 0.02 mol% to about 0.2 mol%, about 0.02 mol% to about 0.15 mol%, about 0.05 mol% to about 0.15 mol%, about 0.05 mol% to about 0.1 mol%, about 0.1 mol% to about 0.15 mol%, about 0.01 mol% to about 0.05 mol%, about 0.02 mol% to about 0.05 mol%, about 0.02 mol% to about 0.04 mol%, about 0.01 mol% to about 0.04 mol%, about 0.01 mol% to about 0.03 mol%, or about 0.02 mol% to about 0.03 mol%. When the amount of tungsten is in these ranges, the positive electrode active material may have excellent capacity characteristics and cycle-life characteristics by containing tungsten at a high concentration and with a thin thickness on the surfaces of the particles.

The coating layer may be in the form of a film that continuously surrounds the surfaces of the core particles, or the coating layer may be in the form of shells that surround the entire surfaces of the core particles. This is distinct from a structure in which only portion of the surfaces of the core particles are coated. The coating layer may be formed in a form that completely covers the surfaces of the core particles while being formed with a very thin and uniform thickness, whereby the positive electrode active material has improved structural stability without increased resistance or decreased capacity, effectively suppressing side reactions with the electrolyte, reducing gas generation under high voltage and high temperature conditions, and implementing long cycle-life characteristics.

In some examples, the coating layer may have a thickness of about 5 nm to about 200 nm, for example, about 5 nm to about 150 nm, about 5 nm to about 100 nm, about 5 nm to about 80 nm, about 5 nm to about 50 nm, or about 10 nm to about 50 nm. If the coating layer is in these thickness ranges, the structural stability of the positive electrode active material may be improved without increasing resistance or reducing capacity due to the coating, and side reactions with the electrolyte may be effectively suppressed. The thickness of the coating layer may be measured, for example, by SEM (scanning electron microscope), TEM (transmission electron microscope), TOF-SIMS (time-of-flight second ion mass spectrometry), XPS (X-ray photoelectron spectroscopy), or EDS analysis, and for example, by EDS (energy-dispersive X-ray spectroscopy) line profile analysis of a cross-section of the positive electrode active material.

The coating layer may further contain nickel, cobalt, or a combination thereof. The nickel and/or cobalt may be contained in the core particles and introduced during the coating layer formation process, and the nickel and/or cobalt contents are not particularly limited. According to some example embodiments, a coating layer contains nickel and/or cobalt, at a thin and uniform thickness, thereby improving the high-voltage characteristics of the positive electrode active material and enhancing cycle-life characteristics.

The positive electrode active material may include core particles including a lithium nickel-based composite oxide, with coating layers provided on the surfaces of the core particles and including aluminum oxide, lithium-aluminum oxide, boron oxide, lithium-boron oxide, tungsten oxide, lithium-tungsten oxide, or a combination thereof.

### Positive Electrode

In some embodiments, a positive electrode includes a positive electrode current collector and a positive electrode active material layer on the current collector, wherein the positive electrode active material layer includes positive electrode active material layer as described above. The positive electrode active material layer may further include other types of positive electrode active materials in addition to the aforementioned positive electrode active materials. For example, the positive electrode active material layer may optionally further include a binder, a conductive material, or a combination thereof.

### Binder

The binder improves binding properties of positive electrode active material particles with one another and with a current collector. Examples of the binder include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon. But the present disclosure is not limited to these examples.

### Conductive Material

The conductive material is included to provide electrode conductivity and any electrically conductive material that does not cause an undesirable chemical change may be used as a conductive material. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The amounts of the binder and the conductive material may be about 0.5 wt% to about 5 wt% based on 100 wt% of the positive electrode active material layer.

The positive electrode current collector may include aluminum thin film, but is not limited thereto.

### Rechargeable Lithium Battery

Embodiments of the present disclosure provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

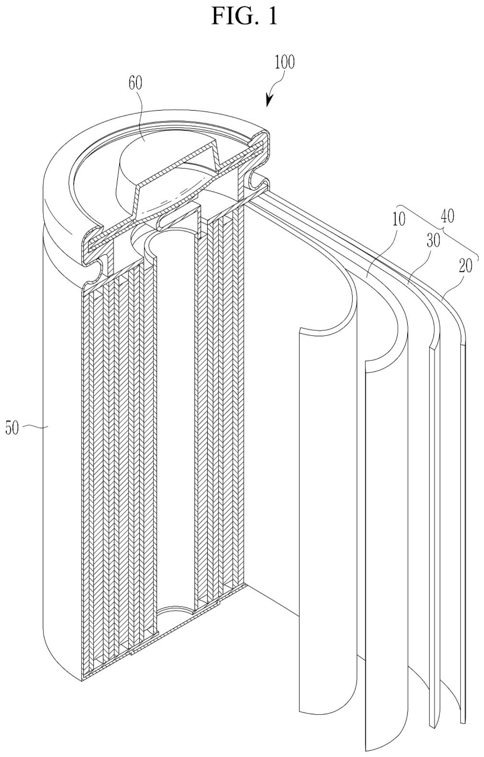

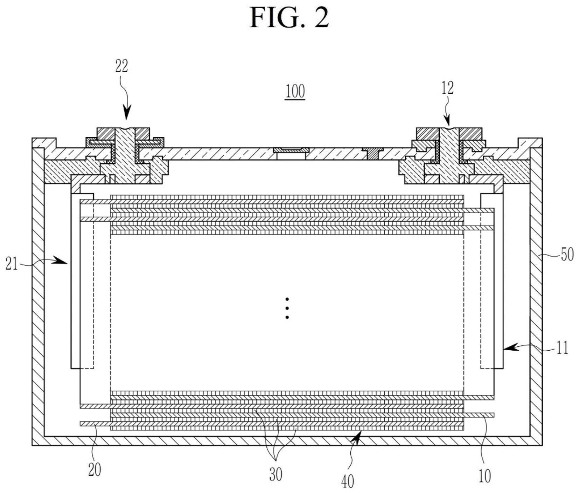

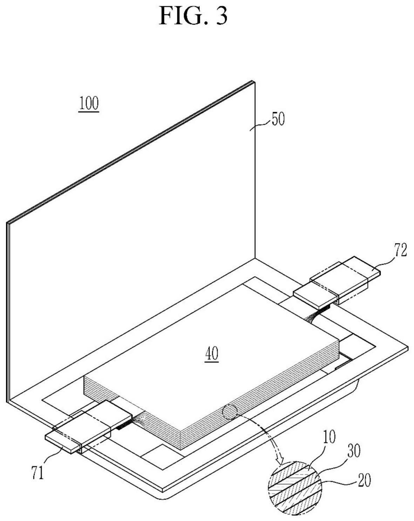

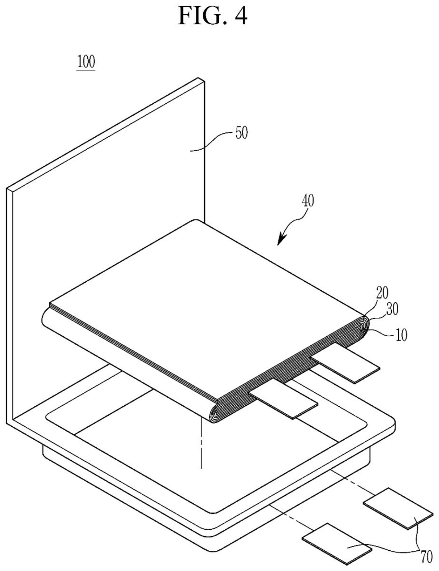

The rechargeable lithium battery may be cylindrical, prismatic, pouch, coin, etc. depending on its shape. FIGS. 1 to 4 are schematic views of rechargeable lithium batteries according to some embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. As shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 forming an electrical path for inducing the current formed in the electrode assembly 40.

### Negative Electrode

The negative electrode may include a current collector and a negative electrode active material layer on the current collector. The negative electrode active material layer may include a negative electrode active material, and may further include a binder, a conductive material, or a combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material.

The Si-based negative electrode active material may include silicon, a silicon-carbon composite, SiOₓ (0<x≤2), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles with amorphous carbon coated on the surface of the silicon particles. For example, the silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

When the silicon-carbon composite includes silicon and amorphous carbon, based on 100 wt% of the silicon-carbon composite, an amount of silicon may be about 10 wt% to about 50 wt% and an amount of amorphous carbon may be about 50 wt% to about 90 wt%. In addition, based on 100 wt% of the silicon-carbon composite, when the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a diameter of particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used that does not cause an undesirable chemical change. Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

Based on 100 wt% of the negative electrode active material layer, an amount of the negative electrode active material may be about 95 wt% to about 99.5 wt% based on 100 wt% of the negative electrode active material layer, and an amount of the binder may be about 0.5 wt% to about 5 wt%. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and the negative electrode current collector may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone or in a mixture of two or more types. When two or more types are used in a mixture, a mixing ratio can be adjusted according to the desired battery performance, as is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within this range, the electrolyte solution has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON^{®}, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer. In other embodiments, a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure are described below. However, the present disclosure is not limited to the following examples.

### Example 1

### 1. Preparation of Positive Electrode Active Material

Ni_{0.91}Co_{0.08}Al_{0.01}(OH)₂ with an average particle diameter (D₅₀) of about 14 µm and LiOH were mixed in a molar ratio of 1:1 and were subjected to first heat treatment at 800 °C for 15 hours under an oxygen atmosphere to prepare core particles containing lithium nickel-based composite oxide having a composition of LiNi_{0.91}Co_{0.08}Al_{0.01}O₂ in the form of secondary particles with an average particle diameter (D₅₀) of about 14 µm.

Two tons of the core particles were poured with two tons of distilled water (washing water) into a 10000 L mixer (Lödige) and then, stirred for about 5 minutes to prepare a first mixed solution. Subsequently, the first mixed solution was press-filtered to remove the water until the water was reduced to 10 wt% based on 100 wt% of a total of the core particles and the water to thereby obtain a washed product.

A second mixed solution was prepared by adding distilled water, aluminum nitrate hydrate (Al(NO₃)₃-9H₂O), and boronic acid (H₃BO₃) to a 20 L reactor and stirring the mixture for about 30 minutes. The distilled water was added in an amount of 5 wt% based on 100 wt% of a total final positive electrode active material, the aluminum nitrate hydrate was added to have an aluminum amount of 0.3 mol% based on 100 mol% of a total metal excluding lithium of the final positive electrode active material, and the boronic acid was added to have a boron amount of 0.25 mol% based on 100 mol% of the total metal excluding lithium of the final positive electrode active material.

The washed product and the second mixed solution were put into the mixer (Lödige), and while mixing at a speed of 5 RPM, the mixer was heated to 380 °C at a heating rate of 2.5 °C/min, and then heat treatment (drying and coating) was performed simultaneously for a total of 5 hours to thereby obtain a positive electrode active material.

### 2. Manufacturing of Coin-type Half-cell

98.5 wt% of the positive electrode active material, 1.0 wt% of a polyvinylidene fluoride binder, and 0.5 wt% of a carbon nanotube conductive material were mixed to prepare positive electrode active material layer slurry, and the slurry was coated on an aluminum foil current collector and then, dried and compressed to make a positive electrode.

The positive electrode was used with a lithium metal counter electrode and an electrolyte to make a coin-type half-cell according to a conventional method. The electrolyte solution was prepared by mixing ethylene carbonate and dimethyl carbonate in a volume ratio of 3:7 and dissolving1 M LiPF₆ in the mixed solvent. A polytetrafluoroethylene separator was used.

### Example 2

A positive electrode active material and a coin-type half-cell were made in the same manner as in Example 1 except that the amount of boron in the boronic acid was changed to 0.5 mol% based on 100 mol% of the total metal excluding lithium in the positive electrode active material.

### Example 3

A positive electrode active material and a coin-type half-cell were made in the same manner as in Example 1 except that the amount of boron of the boronic acid was changed to 1.0 mol% based on 100 mol% of the total metal excluding lithium in the positive electrode active material.

### Example 4

### 1. Preparation of Positive Electrode Active Material

Ni_{0.75}Mn_{0.23}Al_{0.02}(OH)₂ with an average particle diameter (D₅₀) of about 14 µm and LiOH were mixed in a molar ratio of 1:1 and were subjected to first heat treatment at 800 °C for 15 hours under an oxygen atmosphere, to thereby prepare core particles containing lithium nickel-based composite oxide having a composition of LiNi_{0.75}Mn_{0.23}Al_{0.02}O₂ in the form of secondary particles with an average particle diameter (D₅₀) of about 14 µm.

Two tons of the core particles were poured with two tons of distilled into a 10000 L mixer (Lödige) and then, stirred for 5 minutes, preparing a first mixed solution. Subsequently, the first mixed solution was filter-pressed to remove the water until the water was reduced to 10 wt% based on 100 wt% of a total of the core particles and the water to thereby obtain a washed product.

A second mixed solution was prepared by adding distilled water, aluminum nitrate hydrate (Al(NO₃)₃-9H₂O), and boronic acid (H₃BO₃) to a 20 L reactor and then, stirring the mixture for 30 minutes. The distilled water was added in an amount of 5 wt% based on total 100 wt% of a finally prepared positive electrode active material, the aluminum nitrate hydrate was added so that an aluminum amount was 0.2 mol% based on 100 mol% of a total metal excluding lithium in the finally prepared positive electrode active material, and the boronic acid was added so that a boron amount was 0.25 mol% based on 100 mol% of the total metal excluding lithium in the finally prepared positive electrode active material.

The washed product and the second mixed solution were put into the mixer (Lödige), and while mixing at a speed of 5 RPM, the mixer was heated to 380 °C at a heating rate of 2.5 °C/min. Heat treatment (drying and coating) was then performed simultaneously for a total of 5 hours to thereby obtain a positive electrode active material.

Thereafter, a coin-type half-cell was made in the same manner as in Example 1.

### Example 5

A positive electrode active material and a coin-type half-cell were made in the same manner as in Example 4 except that the boron amount of the boronic acid was changed to 0.5 mol% based on 100 mol% of the total metal excluding lithium in the positive electrode active material.

### Example 6

A positive electrode active material and a coin-type half-cell were made in the same manner as in Example 4 except that the boron amount of the boronic acid was changed to 1.0 mol% based on 100 mol% of the total metal excluding lithium in the positive electrode active material.

### Example 7

A positive electrode active material and a coin-type half-cell were made in the same manner as in Example 4 except that the boron amount of the boronic acid was changed to 1.5 mol% based on 100 mol% of the total metal excluding lithium in the positive electrode active material.

### Example 8

### 1. Preparation of Positive Electrode Active Material

Ni_{0.75}Mn_{0.245}Al_{0.005}(OH)₂ with an average particle diameter (D₅₀) of about 4 µm and LiOH were mixed in a molar ratio of 1:1 and were subjected to first heat treatment at 900 °C for 8 hours under an oxygen atmosphere, preparing core particles containing lithium nickel-based composite oxide having a composition of LiNi_{0.75}Mn_{0.245}Al_{0.005}O₂. The lithium nickel-based composite oxide was pulverized with an Air-Jet to prepare core particles containing the lithium nickel-based composite oxide in the form of single particles with an average particle diameter (D₅₀) of about 4 µm.

Two tons of the core particles were added with two tons of distilled water to a 10000 L mixer (Lödige) and then, stirred for 5 minutes to prepare a first mixed solution. Subsequently, the first mixed solution was filter-pressed until the distilled water was reduced to 10 wt% based on 100 wt% of a total of the core particles and the washing water and thereby obtain a washed product.

A second mixed solution was prepared by adding distilled water, aluminum nitrate hydrate (Al(NO₃)₃-9H₂O), and ammonium metatungstate hydrate (H₂₆N₆O₄₀W₁₂-H₂O) to a 20 L reactor and stirring the mixture for about 30 minutes. Herein, the distilled water was added in an amount of 5 wt% based on total 100 wt% of the finally prepared positive electrode active material, the aluminum nitrate hydrate was added so that an aluminum amount was 0.3 mol% based on 100 mol% of the total metal excluding lithium in the finally prepared positive electrode active material, and the ammonium metatungstate hydrate was added so that a tungsten amount was 0.015 mol% based on 100 mol% of the total metal excluding lithium in the finally prepared positive electrode active material.

The washed product and the second mixed solution were put into the mixer (Lödige), and while mixing at a speed of 5 RPM, the mixer was heated to 380 °C at a heating rate of 2.5 °C/min. A heat treatment (drying and coating) was then performed simultaneously for a total of 5 hours to obtain a positive electrode active material.

Thereafter, a coin-type half-cell was made in the same manner as in Example 1.

### Example 9

A positive electrode active material and a coin-type half-cell were made in the same manner as in Example 8 except that the tungsten content of the ammonium metatungstate hydrate was changed to 0.02 mol% based on 100 mol% of the total metal excluding lithium in the finally prepared positive electrode active material.

### Example 10

A positive electrode active material and a coin-type half-cell were made in the same manner as in Example 8 except that the tungsten content of the ammonium metatungstate hydrate was changed to 0.025 mol% based on 100 mol% of the total metal excluding lithium in the finally prepared positive electrode active material.

### Example 11

A positive electrode active material and a coin-type half-cell were made in the same manner as in Example 8 except that the tungsten content of the ammonium metatungstate hydrate was changed to 0.03 mol% based on 100 mol% of the total metal excluding lithium in the finally prepared positive electrode active material.

### Example 12

A positive electrode active material and a coin-type half-cell were made in the same manner as in Example 8 except that the tungsten content of the ammonium metatungstate hydrate was changed to 0.035 mol% based on 100 mol% of the total metal excluding lithium in the finally prepared positive electrode active material.

### Example 13

### 1. Preparation of Positive Electrode Active Material

Ni_{0.75}Mn_{0.23}Al_{0.02}(OH)₂ with an average particle diameter (D₅₀) of about 14 µm and LiOH were mixed in a molar ratio of 1:1. The mixture was subjected to first heat treatment at 800 °C for 15 hours in an oxygen atmosphere to produce core particles containing a lithium nickel-based composite oxide in the form of secondary particles having a composition of LiNi_{0.75}Mn_{0.23}Al_{0.02}O₂ and an average particle diameter (D₅₀) of about 14 µm.

Two tons of the core particles were added with two tons of distilled water to a 10000 L mixer (Lödige) and then stirred for 5 minutes to prepare a first mixed solution. Subsequently, the first mixed solution was filter-pressed to remove the water until the distilled water was reduced to 10 wt% based on 100 wt% of a total of the core particles and the washing water to thereby obtain a washed product.

A second mixed solution was prepared by adding distilled water, aluminum nitrate hydrate (Al(NO₃)₃-9H₂O), and ammonium metatungstate hydrate (H₂₆N₆O₄₀W₁₂-H₂O) to a 20 L reactor and stirring the mixture for about 30 minutes. The distilled water was added in an amount of 5 wt% based on total 100 wt% of the finally prepared positive electrode active material, the aluminum nitrate hydrate was added so that an aluminum amount was 0.2 mol% based on 100 mol% of the total metal excluding lithium in the finally prepared positive electrode active material, and the ammonium metatungstate hydrate was added so that a tungsten content was 0.025 mol% based on 100 mol% of the total metal excluding lithium in the finally prepared positive electrode active material.

The washed product and the second mixed solution were put into the mixer (Lödige), and while mixing at a speed of 5 RPM, the mixer was heated to 380 °C at a heating rate of 2.5 °C/min, and heat treatment (drying and coating) was performed simultaneously for a total of 5 hours to obtain a positive electrode active material.

Thereafter, a coin-type half-cell was made in the same manner as in Example 1.

### Example 14

A positive electrode active material and a coin-type half-cell were made in the same manner as in Example 13 except that the tungsten content of the ammonium metatungstate hydrate was changed to 0.05 mol% based on 100 mol% of the total metal excluding lithium in the finally prepared positive electrode active material.

### Example 15

A positive electrode active material and a coin-type half-cell were made in the same manner as in Example 13 except that the tungsten content of the ammonium metatungstate hydrate was changed to 0.1 mol% based on 100 mol% of the total metal excluding lithium in the finally prepared positive electrode active material.

### Example 16

A positive electrode active material and a coin-type half-cell were made in the same manner as in Example 13 except that the tungsten content of the ammonium metatungstate hydrate was changed to 0.15 mol% based on 100 mol% of the total metal excluding lithium in the finally prepared positive electrode active material.

### Example 17

### 1. Preparation of Positive Electrode Active Material

Ni_{0.75}Mn_{0.23}Al_{0.02}(OH)₂ with an average particle diameter (D₅₀) of about 14 µm and LiOH were mixed in a molar ratio of 1:1 and were subjected to first heat treatment at 800 °C for 15 hours under an oxygen atmosphere to thereby prepare core particles containing lithium nickel-based composite oxide having a composition of LiNi_{0.75}Mn_{0.23}Al_{0.02}O₂ in the form of secondary particles with an average particle diameter (D₅₀) of about 14 µm.

Two tons of the core particles were added with two tons of distilled water to a 10000 L mixer (Lödige) and then stirred for 5 minutes to prepare a first mixed solution. Subsequently, the first mixed solution was filter-pressed to remove the water until the water was reduced to 10 wt% based on 100 wt% of a total of the core particles and the water and thereby obtaining a washed product.

Distilled water and aluminum nitrate hydrate (Al(NO₃)₃-9H₂O) were added to a 20 L reactor and stirred for about 30 minutes to prepare a second mixed solution. The distilled water was added in an amount of 5 wt% based on total 100 wt% of the finally prepared entire positive electrode active material, the aluminum nitrate hydrate was added so that an aluminum amount was 0.2 mol% based on 100 mol% of the total metal excluding lithium in the finally prepared positive electrode active material.

The washed product, tungsten oxide (WO₃) powder, and the second mixed solution were added to the above mixer (Lödige), and while mixing at a speed of 5 RPM, the mixer was heated to 380 °C at a heating rate of 2.5 °C/min, and heat treatment (drying and coating) was performed simultaneously for a total of 5 hours to obtain a positive electrode active material. The tungsten oxide was added so that the tungsten amount was 0.025 mol% based on 100 mol% of the total metal excluding lithium in the finally prepared positive electrode active material.

Thereafter, a coin-type half-cell was made in the same manner as in Example 1.

### Example 18

A positive electrode active material and a coin-type half-cell were made in the same manner as in Example 17 except that the tungsten amount of the tungsten oxide was changed to 0.05 mol% based on 100 mol% of the total metal excluding lithium in the finally prepared positive electrode active material.

### Example 19

A positive electrode active material and a coin-type half-cell were made in the same manner as in Example 17 except that the tungsten amount of the tungsten oxide was changed to 0.1 mol% based on 100 mol% of the total metal excluding lithium in the finally prepared positive electrode active material.

### Example 20

A positive electrode active material and a coin-type half-cell were made in the same manner as in Example 17 except that the tungsten amount of the tungsten oxide was changed to 0.15 mol% based on 100 mol% of the total metal excluding lithium in the finally prepared positive electrode active material.

### Example 21

A positive electrode active material and a coin-type half-cell were made in the same manner as in Example 17 except that the tungsten amount of the tungsten oxide was changed to 0.2 mol% based on 100 mol% of the total metal excluding lithium in the finally prepared positive electrode active material.

### Comparative Example 1

### 1. Preparation of Positive Electrode Active Material

The same washed product as that of Example 1 was added to a mixer and then, while mixing at 5 RPM, dried for 5 hours in total by increasing the mixture temperature to 380 °C, thereby obtaining a dried product.

The dried product was mixed with aluminum oxide (Al₂O₃) and the mixture was subjected to second heat treatment at 400 °C for 8 hours under an oxygen atmosphere to prepare a positive electrode active material. The aluminum oxide was added so that the aluminum content was 0.1 mol% based on 100 mol% of the total metal excluding lithium in the finally prepared positive electrode active material.

### 2. Manufacturing of Coin-type Half-cell

A coin-type half-cell was made in the same manner as in Example 1 except that the positive electrode active material of Comparative Example 1 was used.

### Comparative Example 2

A positive electrode active material and a coin-type half-cell were made in the same manner as in Comparative Example 1 except that the aluminum content of the aluminum oxide was changed to 0.2 mol% based on 100 mol% of the total metal excluding lithium in the positive electrode active material.

### Comparative Example 3

A positive electrode active material and a coin-type half-cell were made in the same manner as in Comparative Example 1 except that the aluminum content of the aluminum oxide was changed to 0.3 mol% based on 100 mol% of a total metal excluding lithium in the positive electrode active material.

### Comparative Example 4

A positive electrode active material and a coin-type half-cell were made in the same manner as in Comparative Example 1 except that the aluminum content of the aluminum oxide was changed to 0.5 mol% based on 100 mol% of a total metal excluding lithium in the positive electrode active material.

### Comparative Example 5

### 1. Preparation of Positive Electrode Active Material

A coating solution was prepared by adding aluminum nitrate hydrate and 600 g of distilled water to a 1 L reactor and stirring the mixture at about 350 rpm for about 5 minutes for salt dissolution. The coating solution, in which salts were completely dissolved, was confirmed to be colorless and transparent. While continuously stirring the coating solution, 500 g of the dried product of the Comparative Example 1 was added thereto for 1.5 minutes and then stirred for about 30 minutes. The aluminum nitrate hydrate was added so that an aluminum amount was 0.2 mol% based on 100 wt% of the total metal excluding lithium in the finally prepared positive electrode active material.

After removing the solvent from the mixed solution by using an aspirator and a filter press, vacuum-drying was performed at 190 °C to obtain a coated product.

The coated product was subjected to a second heat treatment at 750 °C for 8 hours under an oxygen atmosphere to prepare a positive electrode active material.

### 2. Manufacturing of Coin-type Half-cell

A coin-type half-cell was made in in the same manner as in Example 1 except that the positive electrode active material of Comparative Example 5 was used to manufacture a positive electrode.

### Comparative Example 6

A positive electrode active material and a coin-type half-cell were made in the same manner as in Example 1 except that the mixer temperature was increased to 450 °C rather than 380 °C to perform the drying and coating simultaneously in the preparation of positive electrode active material.

### Comparative Example 7

### 1. Preparation of Positive Electrode Active Material

The same washed product as that of Example 4 was stirred at 5 RPM, dried for 5 hours in total while increasing the temperature to 380 °C to make a dried product.

The dried product was mixed with aluminum oxide (Al₂O₃) and the mixture subjected to second heat treatment at 400 °C for 8 hours under an oxygen atmosphere to prepare a positive electrode active material. The aluminum oxide was added so that an aluminum content was 0.5 mol% based on 100 mol% of the total metal excluding lithium in the finally prepared positive electrode active material.

### 2. Manufacturing of Coin-type Half-cell

A coin-type half-cell was made in the same manner as in Example 1 except that the positive electrode active material of Comparative Example 7 was used to manufacture a positive electrode.

### Comparative Example 8

### 1. Preparation of Positive Electrode Active Material

A coating solution was prepared by adding aluminum nitrate hydrate and 600 g of distilled water to a 1 L reactor and then stirring the mixture at about 350 rpm for about 5 minutes for salt dissolution. The coating solution, in which salts were completely dissolved, was confirmed to be colorless and transparent. 500 g of the dried product of the Comparative Example 7 was added to the coating solution, while continuously stirring, for 1.5 minutes and then stirred for about 30 minutes. The aluminum nitrate hydrate was added so that an aluminum amount was 0.2 mol% based on 100 wt% of the total metal excluding lithium in the finally prepared positive electrode active material.

After removing the solvent from the mixed solution by using an aspirator and a filter press, vacuum-drying was performed at 190 °C to obtain a coated product.

The coated product was subjected to second heat treatment at 750 °C for 8 hours under an oxygen atmosphere to prepare the positive electrode active material.

### 2. Manufacturing of Coin-type Half-cell

A coin-type half-cell was made in the same manner as in Example 1 except that the Comparative Example 8 positive electrode active material was used to make a positive electrode.

### Comparative Example 9

A positive electrode active material and a coin-type half-cell were made in the same manner as in Comparative Example 8 except that the aluminum content of the aluminum nitrate hydrate was changed to 1.0 mol% based on 100 mol% of a total metal excluding lithium in the finally prepared positive electrode active material.

### Comparative Example 10

A positive electrode active material and a coin-type half-cell were made in the same manner as in Example 4 except that the positive electrode active material was prepared by not adding the boronic acid and the drying and coating were simultaneously performed by increasing the mixer temperature to 450 °C rather than 380 °C.

### Comparative Example 11

### 1. Preparation of Positive Electrode Active Material

The same washed product as that of Example 8 was added to a mixer, and then, while mixing at 5 RPM, dried for 5 hours in total by increasing the mixture temperature to 380 °C to thereby obtain a dried product.

The dried product was mixed with aluminum oxide (Al₂O₃) and was subjected to second heat treatment at 400 °C for 8 hours under an oxygen atmosphere to prepare a positive electrode active material. The aluminum oxide was added so that an aluminum content was 0.4 mol% based on 100 mol% of the total metal excluding lithium in a finally prepared positive electrode active material.

### 2. Manufacturing of Coin-type Half-cell

A coin-type half-cell was made in the same manner as in Example 1 except that the positive electrode active material of Comparative Example 11 was used to make a positive electrode.

### Comparative Example 12

### 1. Preparation of Positive Electrode Active Material

A coating solution was prepared by adding aluminum nitrate hydrate and 600 g of distilled water to a 1 L reactor and stirring the mixture at about 350 rpm for about 5 minutes for salt dissolution. The coating solution, in which salts were completely dissolved, was confirmed to be colorless and transparent. 500 g of the same dried product of Comparative Example 11 was added to the coating solution, while stirring, for 1.5 minutes and then stirred for about 30 minutes. The aluminum nitrate hydrate was added so that an aluminum content was 0.2 mol% based on 100 wt% of the total metal excluding lithium in the finally prepared positive electrode active material.

After removing the solvent from the mixed solution by using an aspirator and a filter press, vacuum-drying was performed at 190 °C to obtain a coated product.

The coated product was subjected to second heat treatment at 750 °C for 8 hours under an oxygen atmosphere to prepare the positive electrode active material.

### 2. Manufacturing of Coin-type Half-cell

A coin-type half-cell was made in the same manner as in Example 1 except that the positive electrode active material of Comparative Example 12 was used to make a positive electrode.

### Comparative Example 13

A positive electrode active material and a coin-type half-cell were made in the same manner as in Comparative Example 12 except that the aluminum content of the aluminum nitrate hydrate was designed to be 0.3 mol% based on 100 wt% of the total metal excluding lithium in the positive electrode active material.

### Comparative Example 14

A positive electrode active material and a coin-type half-cell were made in the same manner as in Example 8 except that the positive electrode active material was prepared by not adding the ammonium metatungstate hydrate, and the drying and coating were simultaneously performed by increasing the mixer temperature to 450 °C rather than 380 °C.

The aluminum content of the aluminum raw material, the tungsten content of the tungsten raw material, and the boron content of the boron raw material used to prepare the positive electrode active materials of the examples and the comparative examples are shown in Table 1 below.

### Evaluation 1: Initial Charge/Discharge Capacity and Efficiency

The rechargeable lithium battery cells according to the examples and the comparative examples were charged to an upper limit voltage of 4.55 V at a constant current of 0.2 C and to 0.05 C at the constant voltage and then, discharged to a cut-off voltage of 3.0 V at the 0.2 C at 25 °C for initial charge and discharge. In Table 1 below, initial charge capacity, initial discharge capacity, and a ratio of the latter to the former as efficiency are shown.

### Evaluation 2: -20 °C Capacity

The rechargeable lithium battery cells of the examples and the comparative examples were charged to an upper limit voltage of 4.25 V at a constant current of 0.2 C and to 0.05 C at the constant voltage and discharged to cut-off voltage of 3.0 V at the 0.2 C at 25 °C for initial charge and discharge. In addition, the cells were charged to the upper limit voltage of 4.25 V at the constant current of 0.2 C at 25 °C and to 0.05 C at the constant voltage and then discharged to a cut-off voltage of 3.0 V at the 0.2 C at -20 °C to measure discharge capacity, which is shown in Table 1 below.

### Evaluation 3: High-temperature Cycle-life

After the initial charge/discharge of Evaluation 1, the cells were repeatedly charged and discharged 50 times or more at 1.0 C within a voltage range of 3.0 V to 4.55 V at 45 °C to calculate a ratio of 50^{th} cycle discharge capacity to the initial discharge capacity, and the results are shown in Table 1 below.

### Evaluation 4: Capacity Recovery Rate

The rechargeable lithium battery cells of the examples and the comparative examples were once charged and discharged at 0.3 C to measure discharge capacity. Subsequently, the obtained battery cells were stored at a high temperature (45 °C) for 7 days and once charged and discharged at the 0.3 C to measure discharge capacity. A ratio of the discharge capacity after stored for 7 days to the discharge capacity before stored at the high temperature was calculated. The results are shown as a capacity recovery rate in Table 1.

### Evaluation 5: Energy Density

The rechargeable lithium battery cells of the examples and the comparative examples were charged and discharged at a rate of 0.2 C/0.2 C within a voltage range of 3.0 V to 4.45 V at 25 °C to calculate energy density, which is shown in Table 1. The energy density was calculated according to an equation of {(average driving voltage (V) x capacity (Ah))/cell weight (kg)}, wherein the capacity was obtained by multiplying a positive electrode volume (cc) with discharge specific capacity (Ah/cc).

**Table 1**

| | Al (mo l%) | B (mo l%) | W (mol %) | Initial charge capacity (mAh/g) | Initial dischar gecapacit y (mAh/g ) | Effic ienc y (%) | -20°C Discharge capacit y (mAh/g ) | Cycl e-life(%) | Capa city recovery rate (%) | Ener gy density (Wh/k g) |
|---|---|---|---|---|---|---|---|---|---|---|
| Ex. 1 | 0.3 | 0.2 5 | - | 245.1 | 215.9 | 88.1 | 167 | 97.6 | 81.2 | 783 |
| Ex. 2 | 0.3 | 0.5 | - | 245.0 | 215.6 | 88.0 | 168 | 98.2 | 82.1 | 783 |
| Ex. 3 | 0.3 | 1.0 | - | 244.7 | 214.8 | 87.8 | 169 | 98.0 | 82.2 | 783 |
| Ex. 4 | 0.2 | 0.2 5 | - | 231.3 | 197.3 | 85.3 | 123 | 89.2 | 82.3 | 748 |
| Ex. 5 | 0.2 | 0.5 | - | 232.5 | 199.5 | 85.8 | 127 | 90.3 | 83.1 | 758 |
| Ex. 6 | 0.2 | 1.0 | - | 232.2 | 199.9 | 86.1 | 128 | 91.2 | 84.4 | 760 |
| Ex. 7 | 0.2 | 1.5 | - | 231.7 | 199.3 | 86.0 | 128 | 89.8 | 84.2 | 757 |
| Ex. 8 | 0.3 | - | 0.01 5 | 231.2 | 198.1 | 85.7 | 120 | 88.2 | 85.7 | 751 |
| Ex. 9 | 0.3 | - | 0.02 | 232.1 | 201.7 | 86.9 | 124 | 90.7 | 85.8 | 764 |
| Ex. 10 | 0.3 | - | 0.02 5 | 232.7 | 204.5 | 87.9 | 127 | 91.9 | 86.1 | 775 |
| Ex. 11 | 0.3 | - | 0.03 | 232.5 | 204.1 | 87.8 | 127 | 91.5 | 86.0 | 774 |
| Ex. 12 | 0.3 | - | 0.03 5 | 232.5 | 203.2 | 87.4 | 126 | 91.2 | 85.7 | 770 |
| Ex. 13 | 0.2 | - | 0.02 5 | 232.1 | 200.7 | 86.5 | 125 | 90.5 | 84.5 | 761 |
| Ex. 14 | 0.2 | - | 0.05 | 232.5 | 203.0 | 87.3 | 127 | 91.8 | 85.9 | 769 |
| Ex. 15 | 0.2 | - | 0.1 | 231.9 | 201.3 | 86.8 | 127 | 91.4 | 85.6 | 763 |
| Ex. 16 | 0.2 | - | 0.15 | 231.4 | 199.9 | 86.4 | 125 | 91.3 | 85.4 | 758 |
| Ex. 17 | 0.2 | - | 0.02 5 | 231.4 | 199.7 | 86.3 | 123 | 89.3 | 83.2 | 757 |
| Ex. 18 | 0.2 | - | 0.05 | 231.8 | 201.0 | 86.7 | 125 | 90.1 | 84.2 | 762 |
| Ex. 19 | 0.2 | - | 0.1 | 232.2 | 202.2 | 87.1 | 125 | 90.8 | 84.9 | 767 |
| Ex. 20 | 0.2 | - | 0.15 | 231.6 | 201.5 | 87.0 | 125 | 90.6 | 84.5 | 764 |
| Ex. 21 | 0.2 | - | 0.2 | 231.4 | 200.2 | 86.5 | 124 | 90.3 | 84.4 | 759 |
| Comp. Ex. 1 | 0.1 | - | - | 245.2 | 209.2 | 85.3 | 150 | 85.0 | 62.0 | 766 |
| Comp. Ex. 2 | 0.2 | - | - | 244.7 | 208.2 | 85.1 | 149 | 84.8 | 62.3 | 760 |
| Comp. Ex. 3 | 0.3 | - | - | 244.3 | 207.4 | 84.9 | 145 | 84.5 | 62.4 | 751 |
| Comp. Ex. 4 | 0.5 | - | - | 243.6 | 205.8 | 84.5 | 140 | 84.1 | 61.9 | 743 |
| Comp. Ex. 5 | 0.2 | - | - | 243.1 | 208.3 | 85.7 | 153 | 93.1 | 70.4 | 752 |
| Comp. Ex. 6 | 0.3 | - | - | 243.9 | 209.3 | 85.8 | 154 | 90.6 | 74.3 | 755 |
| Comp. Ex. 7 | 0.5 | - | - | 229.7 | 195.6 | 85.2 | 115 | 75.1 | 75.0 | 741 |
| Comp. Ex. 8 | 0.2 | - | - | 229.6 | 194.5 | 84.9 | 117 | 85.2 | 80.9 | 739 |
| Comp. Ex. 9 | 1.0 | - | - | 229.1 | 195.2 | 85.2 | 114 | 80.9 | 81.2 | 740 |
| Comp. Ex. 10 | 0.2 | - | - | 228.9 | 192.1 | 83.9 | 105 | 83.2 | 72.2 | 741 |
| Comp. Ex. 11 | 0.4 | - | - | 230.5 | 196.5 | 85.2 | 120 | 81.2 | 83.2 | 745 |
| Comp. Ex. 12 | 0.2 | - | - | 230.9 | 196.9 | 85.3 | 119 | 83.2 | 85.1 | 746 |
| Comp. Ex. 13 | 0.3 | - | - | 230.5 | 196.2 | 85.1 | 117 | 84.1 | 85.5 | 743 |
| Comp. Ex. 14 | 0.3 | - | - | 230.7 | 197.0 | 85.4 | 115 | 85.4 | 82.3 | 748 |

Referring to Table 1, when using a lithium nickel composite oxide in the form of secondary particles having a composition of LiNi_{0.91}Co_{0.08}Al_{0.01}O₂ and an average particle diameter (D₅₀) of about 14 µm as core particles, in Examples 1 to 3, in which a coating layer including aluminum and boron was formed by a wet coating method using aluminum nitrate and boronic acid during operation of a mixer after a washing process, had superior initial charge/discharge capacity and efficiency, capacity recovery rate, and cycle-life characteristics as compared to Comparative Examples 1 to 4 in which an aluminum coating layer was formed through dry coating of a washed product, Comparative Example 5 in which an aluminum coating layer was formed on a washed product by a wet method but drying and a second heat treatment were performed as separate processes, and Comparative Example 6 in which drying and coating were performed at a high temperature.

Further, when using a lithium nickel-based composite oxide in the form of secondary particles having a composition of LiNi_{0.75}Mn_{0.23}Al_{0.02}O₂ and an average particle diameter (D₅₀) of about 14 µm as core particles, in Examples 4 to 7, in which drying and forming of aluminum and boron coating layers were simultaneously performed by wet coating using aluminum nitrate hydrate and boronic acid during the operation of a mixer after a washing process, the initial charge/discharge capacity and efficiency, capacity recovery rate, cycle-life characteristics, and energy density were superior as compared to Comparative Example 7 in which an aluminum coating layer was formed through dry coating of a washed product, Comparative Examples 8 and 9 in which an aluminum coating layer was formed on a washed product by wet coating but drying and a second heat treatment were performed as separate processes, and Comparative Example 10 in which drying and coating were performed at a high temperature.

Still further, when using a lithium nickel-based composite oxide in the form of single particles with a composition of LiNi_{0.75}Mn_{0.245}Al_{0.005}O₂ and an average particle diameter (D₅₀) of about 4 µm as core particles, in Examples 8 to 12, in which drying and forming of aluminum and tungsten coating layers were simultaneously performed by wet coating using aluminum nitrate hydrate and ammonium metatungstate hydrate during the operation of a mixer after a washing process, the initial charge/discharge capacity and efficiency, capacity recovery rate, cycle-life characteristics, and energy density were superior as compared to Comparative Example 11 in which an aluminum coating layer was formed through dry coating, Comparative Examples 12 and 13 in which an aluminum coating layer was formed through wet coating, and Comparative Example 14 in which drying and coating are performed at a high temperature.

Also, when using a lithium nickel-based composite oxide in the form of secondary particles having a composition of LiNi_{0.75}Mn_{0.23}Al_{0.02}O₂ and an average particle diameter (D₅₀) of about 14 µm as core particles, in Examples 13 to 16 in which drying and forming of aluminum and tungsten coating layers were simultaneously performed by wet coating using aluminum nitrate hydrate and ammonium metatungstate hydrate during operation of a mixer after a washing process, it can be confirmed that the initial charge/discharge capacity and efficiency, the capacity recovery rate, cycle-life characteristics, and energy density were superior as compared to Comparative Example 7 in which an aluminum coating layer was formed through dry coating of a washed product, Comparative Examples 8 and 9 in which an aluminum coating layer was formed on a washed product by wet coating but drying and a second heat treatment were performed as separate processes, and Comparative Example 10 in which drying and coating were performed at a high temperature.

In addition, when using a lithium nickel composite oxide in the form of secondary particles having a composition of LiNi_{0.75}Mn_{0.23}Al_{0.02}O₂ and an average particle diameter (D₅₀) of about 14 µm as core particles, in Examples 17 to 21 in which drying and coating using aluminum nitrate hydrate and powdered tungsten oxide were performed simultaneously during the operation of the mixer after the washing process, the initial charge/discharge capacity and efficiency, capacity recovery rate, cycle-life characteristics, and energy density were superior as compared to Comparative Example 7 in which an aluminum coating layer was formed through dry coating of a washed product, Comparative Examples 8 and 9 in which an aluminum coating layer was formed on a washed product in a wet manner but drying and second heat treatment were performed as separate processes, and Comparative Example 10 in which drying and coating were performed at a high temperature.

While this disclosure has been described in connection with what is presently considered to be practical example embodiments, it is to be understood that the disclosure is not limited to the disclosed embodiments. On the contrary, the present disclosure includes various modifications and equivalent arrangements.

## Claims

1. A method of preparing a positive electrode active material, comprising
(i) preparing core particles including a lithium nickel-based composite oxide;
(ii) mixing the core particles and water to wash the core particles;
(iii) removing a portion of the water so that the water is included in an amount of 1 wt% to 10 wt% based on a total 100 wt% of the core particles and water and thereby obtain a washed product; and
(iv) mixing the washed product, an aluminum raw material and a metal raw material and performing heat treatment at 300 °C to 400 °C,
wherein the metal raw material is a boron raw material or a tungsten raw material.

2. The method as claimed in claim 1, wherein the lithium nickel-based composite oxide is represented by:
Liₐ₂Niₓ₂M³_{y2}M⁴_{z2}O_{2-b2}X_{b2}
where 0.9≤a2≤1.8, 0.3≤x2≤1, 0≤y2≤0.7, 0≤z2≤0.7, 0.9≤x2+y2+z2≤1.1, and 0≤b2≤0.1, M³ and M⁴ are each one or more of Al, B, Ba, Ca, Ce, Co, Cr, Cu, Fe, Mg, Mn, Mo, Nb, Si, Sn, Sr, Ti, V, W, Y, Zn, and Zr, M³ and M⁴ are different from each other, and X is one or more of F, P, and S.

3. The method as claimed in claim 1 or claim 2, wherein an amount of nickel in the lithium nickel-based composite oxide is greater than or equal to 60 mol% based on 100 mol% of a total metal excluding lithium in the lithium nickel-based composite oxide.

4. The method as claimed in any one of claims 1 to 3, wherein the core particles are in a form of secondary particles that are agglomerations of primary particles or in a form of single particles.

5. The method as claimed in claim 4, wherein an average particle diameter (D₅₀) of the secondary particles is 8 µm to 15 µm, and
wherein an average particle diameter (D₅₀) of the single particles is 2 µm to 5 µm.

6. The method as claimed in any one of claims 1 to 5, wherein, in the washing of the core particles, the core particles and the water are mixed in a weight ratio of core particles to water of 0.5:1 to 1:1.

7. The method as claimed in any one of claims 1 to 6, wherein an amount of aluminum of the aluminum raw material is 0.1 mol% to 1.0 mol% based on 100 mol% of a total metal excluding lithium in the core particles and aluminum of the aluminum raw material.

8. The method as claimed in any one of claims 1 to 7, wherein an amount of boron of the boron raw material is 0.1 mol% to 3.0 mol% based on 100 mol% of a total metal excluding lithium in the core particles and boron of the boron raw material.

9. The method as claimed in any one of claims 1 to 8, wherein the tungsten raw material comprises ammonium metatungstate hydrate (H₂₆N₆O₄₀W₁₂-H₂O) or tungsten oxide.

10. The method as claimed in any one of claims 1 to 9, wherein an amount of tungsten of the tungsten raw material is 0.01 mol% to 0.5 mol% based on 100 mol% of the metal excluding lithium in the core particles and tungsten of the tungsten raw material.

11. The method as claimed in any one of claims 1 to 10, wherein the tungsten raw material is in a solid state.

12. The method as claimed in any one of claims 1 to 11, wherein the mixing is performed by rotating the washed product, the aluminum raw material and the metal raw material at a speed of less than or equal to 50 RPM.

13. The method as claimed in any one of claims 1 to 12, wherein the heat treatment is performed at a temperature of 350 °C to 390 °C.

14. A positive electrode active material prepared by the method as claimed in any one of claims 1 to 13.

15. A rechargeable lithium battery comprising:
a positive electrode comprising a positive electrode active material as claimed in claim 14;
a negative electrode; and
an electrolyte.
